# EUROPEAN PATENT APPLICATION

(11) **EP 4 699 434 A1**
(43) Date of publication of application: **25.02.2026**
(21) Application number: 25187284.2
(22) Date of filing: 03.07.2025
(51) Int. Cl.: A01D 43/10, A01D 82/00, A01F 15/08

(54) **METHOD TO DETECT CROP CONDITIONING PERFORMANCE IN ROLL TYPE CONDITIONERS**

(30) Priority: 19.08.2024 US 202418808551
(71) Applicant: Deere & Company, Moline, IL 61265 (US)
(72) Inventor: CHANEY, NATHAN A, 68163 Mannheim (DE); HILL, KELLEN B, 68163 Mannheim (DE)
(74) Representative: Stein, Stefan

(57) **Abstract**

A crop conditioning system for an agricultural vehicle includes a crop conditioning arrangement having a frame, a first roller rotatably mounted to the frame, a second roller movably and rotatably mounted to the frame. A space between the first roller and second roller defines a gap for receiving crop material. A biasing member is operatively coupled to the second roller and biases the second roller toward the first roller. A first sensor is configured to detect the gap. A controller receives input data from the first sensor and outputs control signals to control the crop conditioning arrangement. The controller includes a processor configured to determine a status of the crop conditioning arrangement based on the input data. The determined status is indicative of a level of crop conditioning. The processor generates adjustment data indicative of an adjustment to the second roller in response to the determined status.

## Description

### BACKGROUND

In an agricultural setting, crop materials are often cut, conditioned, arranged into windrows, and/or otherwise processed. In some cases, the crop materials may be raked, chopped, and/or baled as well. Certain work vehicles are provided for these activities. Some harvesting work vehicles and attachable equipment, such as conditioning work vehicles and/or windrowing work vehicles, may include implements for cutting, conditioning, and/or arranging the crop material into a windrow as the work vehicle moves across a field

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques and systems are described herein for a crop conditioning system for an agricultural vehicle. The crop conditioning system may comprise a crop conditioning arrangement comprising a frame, a first roller rotatably mounted to the frame, and a second roller movably and rotatably mounted to the frame above the first roller. A space between the first roller and second roller may define a gap for receiving crop material. The crop conditioning arrangement may include a biasing member operatively coupled to the second roller to generate a bias force biasing the second roller toward the first roller while crop material moves between the first roller and the second roller. A first sensor may be operatively coupled the second roller and configured to detect the gap. The crop conditioning system may further include a controller that receives input data from the first sensor and outputs control signals to control the crop conditioning arrangement. The controller may include at least one processor and a memory that stores instructions. When the instructions are executed by the at least one processor, the instructions may configure the at least one processor to determine a status of the crop conditioning arrangement based on the input data, the status being indicative of at least one of a level of crop conditioning by the crop conditioning arrangement or an operating status of the conditioning arrangement. The instructions may further configure the processor to generate adjustment data indicative of an adjustment to the second roller of the crop conditioning arrangement in response to the status of the crop conditioning arrangement.

In another implementation, a crop conditioning system for an agricultural vehicle may comprise a crop conditioning arrangement comprising a frame, a first roller rotatably mounted to the frame, and a second roller movably and rotatably mounted to the frame above the first roller. A space between the first roller and second roller may define a gap for receiving crop material. The crop conditioning arrangement may include a biasing member operatively coupled to the second roller to generate a bias force biasing the second roller toward the first roller while crop material moves between the first roller and the second roller. A first sensor may be operatively coupled to the first roller and the second roller and configured to detect the bias force. The crop conditioning system may further include a controller that receives input data from the first sensor and outputs control signals to control the crop conditioning arrangement. The controller may include at least one processor and a memory that stores instructions. When the instructions are executed by the at least one processor, the instructions may configure the at least one processor to determine a status of the crop conditioning arrangement based on the input data, the status being indicative of at least one of a level of crop conditioning by the crop conditioning arrangement or an operating status of the conditioning arrangement. The instructions may further configure the processor to generate adjustment data indicative of an adjustment to the biasing member of the crop conditioning arrangement in response to the status of the crop conditioning arrangement.

In another implementation, a crop conditioning system for an agricultural vehicle may comprise a crop conditioning arrangement comprising a frame, a first roller rotatably mounted to the frame, and a second roller movably and rotatably mounted to the frame above the first roller. A space between the first roller and second roller may define a gap for receiving crop material. The crop conditioning arrangement may include a biasing member operatively coupled to the second roller to generate a bias force biasing the second roller toward the first roller while crop material moves between the first roller and the second roller. A first sensor may be operatively coupled to the second roller and configured to detect the gap, and a second sensor may be operatively coupled to the biasing member and configured to detect the bias force. An actuator may be operatively coupled to the second roller. The crop conditioning system may further include a controller that receives input data from the first sensor and second sensor and outputs control signals to control the crop conditioning arrangement. The controller may include at least one processor and a memory that stores instructions. When the instructions are executed by the at least one processor, the instructions may configure the at least one processor to determine a status of the crop conditioning arrangement based on the input data, the status being indicative of at least one of a level of crop conditioning by the crop conditioning arrangement or an operating status of the conditioning arrangement. The instructions may further configure the processor to generate adjustment data indicative of an adjustment to the second roller of the crop conditioning arrangement in response to the status of the crop conditioning arrangement. The instructions may further configure the processor to command the actuator to move the second roller to increase or decrease the gap according to the adjustment data.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

Fig. 1 illustrates a diagram of an exemplary, non-limiting implementation of a vehicle according to various aspects.
Fig. 2 illustrates a section view of the vehicle of Fig. 1 according to various aspects.
Fig. 3 illustrates a section view of the vehicle of Fig. 2 according to various aspects.
Fig. 4 illustrates a block diagram of an exemplary, non-limiting implementation of a system for the vehicle of Figs. 1-3 according to one or more aspects.
Fig. 5 illustrates a block diagram of an exemplary, non-limiting implementation of a control system according to various aspects.
Fig. 6 is a flow chart of an exemplary, non-limiting implementation for controlling a vehicle according to various aspects.
Fig. 7 is a schematic diagram of an exemplary, non-limiting implementation of a computing device according to various aspects.
Fig. 8 illustrates a side view of the components of an exemplary conditioning arrangement.
Fig. 9 illustrates a side view of the components of an alternative exemplary conditioning arrangement.

### DETAILED DESCRIPTION

As described above, some crops may be harvested by cutting the crop and forming windrows with an agricultural machine such as a self-propelled windrower or a mower-conditioner. Such machines may have a header with a cutter bar that operates to cut the crop. The machines may also have a conveyor such as an auger to carry cut crop material from the cutter bar to other components, such as a conditioner.

Conditioning crop, such as hay for example, accelerates dry down time of the crop to reduce a time from a cutting operation to a bale operation. For example, conditioning hay by crushing or bruising the stems can cut drying time by 30-50%, reducing exposure to bad weather and retaining color, vitamins, and nutrients. Consistency in soft hay makes hay more palatable to livestock. While conditioning is effective on coarse-stemmed, leafy hays, and particularly legumes, it is recognized that conditioning fine-stemmed grass hay may also be beneficial. However, 1-4% of the potential crop may be lost during conditioning.

Adjustment of conditioning parameters (distance between conditioning rolls and force exerted on the crop from the rolls) is often a trial-and-error procedure. When starting a field, operators may adjust to a setting of their best guess, run the machine for a short period of time, stop the machine, then visually inspect the cut crop to check that the crop is not under or over conditioned. This can take a few iterations before the desired conditioning level is achieved. Crop yield and crop density can vary throughout the field. Accordingly, the optimal settings could vary with yield or crop quantity flow rate through the machine. Traditionally, operators do not change conditioning parameters throughout the field after the initial trial and error period. Thus, operators may not achieve optimal conditioning levels in some spots in the field.

According to an aspect, active monitoring of conditioning can occur on the agricultural machine during cutting. Via monitoring, data indicative of a conditioning level can be evaluated. The conditioning level can be output to an operator to perform adjustments. In another aspect, automatic adjustments may be made. For example, a controller of the machine can send control signals to components (e.g. actuators, other controllers, etc.) to change settings of the machine affecting conditioning. For instance, roll gap (e.g. distance between conditioning rollers) and/or a speed of the vehicle may be adjusted. In yet another aspect, determined adjustments can be output to an operator for confirmation before execution.

In another aspect, automatic adjustment of roll gap and/or roll pressure may be based on crop quantity flow rate. Crop quantity flow rate is a function of crop yield and harvest speed and can be measured in a variety of ways including direct on-board measurement from power level of a tractor power take-off, pressure of the hydraulic motor powering a windrower platform, or force exerted on the swath flap from crop, and indirect or off-board measurements from aerial remote sensing or estimations based on previous mapped data layers. Roll gap and roll pressure can be adjusted hydraulically or electrically (e.g. via an electric actuator). An algorithm and controller will adjust the gap and pressure throughout a field based on the measured yield or crop quantity flow rate.

As described herein, automatic monitoring and control of conditioning provides optimal conditioning throughout a field despite variances in yield and density. Optimal conditioning is a normal conditioning level associated with a particular dry down time. Accordingly, optimal conditioning or normal conditioning level can vary depending on a type of crop. Over-conditioning, e.g. conditioning more than the normal level, may lead to power loss and nutrient loss in the crop. Under-conditioning, e.g. conditioning less than the normal level, may lead to longer drying times.

As noted above, crop density and/or growth may vary in a field based on soil quality and other environmental factors. Accordingly, the quantity of crop being cut and processed through a conditioning also varies. In one implementation, the quantity can be classified into three cases. In case 1, a normal or average amount of crop is being harvested. In case 2, a high-density or high-growth section of crop is being harvested. In case 3, a low density or low-growth section of crop is being harvested. This classification may be applicable to an agricultural machine having a header configuration where there are separate motors (e.g. hydraulic motors, electric, etc.) for the cutter bar/cutting element and for the auger and conditioner. For example, a motor load for the cutter bar/cutting element (also referred to header) is a good representation of the quantity of crop being processed. Thus, the header motor load can be used to classify sections as cases 1, 2, or 3. This classification may be performed based on configured thresholds or via (trained) machine learning models. Further to this example, the load on the conditioning or auger motor represents another variable. These two signals can be utilized to determine a conditioning performance index which can aid operators or drive active controls for vehicle speed or roller gap (or both) to achieve optimal conditioning in all cases.

In some implementations, the conditioning performance index can indicate one of optimal or normal conditioning, over-conditioning, or under-conditioning. According to an example, when a cutter bar motor or header motor indicates an average quantity of crop being harvested, the conditioner motor load can be utilized to determine the conditioning performance index. In this example, a nominal load on the conditioner motor may be indicative of normal or optimal conditioning. An above nominal load on the conditioner motor may be indicative of over-conditioning. A below nominal load on the conditioner motor may be indicative of under-conditioning.

In another example, the cutter bar motor or header motor load indicates a high quantity (e.g. high growth or high density) of crop is being harvested. In this example, a nominal load on the conditioner motor may be indicative of under-conditioning. An above nominal load on the conditioner motor may be indicative of normal or optimal conditioning. A below nominal load on the conditioner motor may be indicative of under-conditioning and, particularly, severe or significant under-conditioning.

In another example, the cutter bar motor or header motor load indicates a high quantity (e.g. high growth or high density) of crop is being harvested. In this example, a nominal load on the conditioner motor may be indicative of under-conditioning. An above nominal load on the conditioner motor may be indicative of normal or optimal conditioning. A below nominal load on the conditioner motor may be indicative of under-conditioning and, particularly, severe or significant under-conditioning.

In another example, the cutter bar motor or header motor load indicates a low quantity (e.g. low growth or low density) of crop is being harvested. In this example, a nominal load on the conditioner motor may be indicative of over-conditioning. An above nominal load on the conditioner motor may be indicative of over-conditioning and, particularly, severe, excessive, or significant over-conditioning. A below nominal load on the conditioner motor may be indicative of normal or optimal conditioning.-

In some implementations, specific adjustments can improve conditioning outcomes in under-conditioning or over-conditioning situations. An under-conditioning situation may indicate that the roll gap is high relative to a quantity of crop being processed. In response, the roll gap can be reduced and/or a vehicle speed can be increased (e.g. to increase an amount of crop flowing into the conditioner). A visual aid to the operator may be utilized to inform the operator to execute the adjustment. Alternatively, automatic control of the vehicle and/or roll gap can autonomously execute the adjustment.

An over-conditioning situation may indicate that the roll gap is low relative to the quantity of crop being processed. In response, the roll gap can be increased and/or a vehicle speed (e.g. harvesting speed) can be decreased, which reduces an amount of crop flowing into the conditioner. A visual aid to the operator may be utilized to inform the operator to execute the adjustment. Alternatively, automatic control of the vehicle and/or roll gap can autonomously execute the adjustment.

In an implementation, the agricultural machine can include a gap sensor configured to detect the gap between a first and second roller of the machine and a bias or downforce sensor configured to detect the downforce applied to the first of second roller of the machine. As crop material moves between the first and second roller, the gap sensor can detect the dynamic distance between the first and second roller. The downforce sensor detects a static downforce when no crop material is fed between the rollers. When crop material moves between the rollers, the crop may counter the static downforce and the downforce sensor can dynamically detect a downforce between zero and the static downforce. A processor in a controller can receive and process the data from these sensors to determine the level of conditioning of the crop or the operating status of the conditioner arrangement of the machine. For instance, the level of conditioning or the operating status may be one of: under-conditioning of a crop, over-conditioning of the crop, optimal conditioning of the crop, gap too big, or gap too small. For example, the processor may determine the status to be optimal conditioning when the gap sensor detects the gap to be between fully open and fully closed and the downforce sensor detects a downforce of zero with slight and occasional increases in force. Alternatively, the processor may determine the status to be over-conditioning when the gap sensor detects the gap to be at or close to fully closed and the downforce sensor never reaches zero. The possible statuses are described in further detail below. Once the operating status has been determined, the controller may command an actuator operatively coupled to the first and/or second rollers to adjust the roll gap. Alternatively, the controller may command an actuator operatively coupled to a biasing member to adjust the downforce.

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

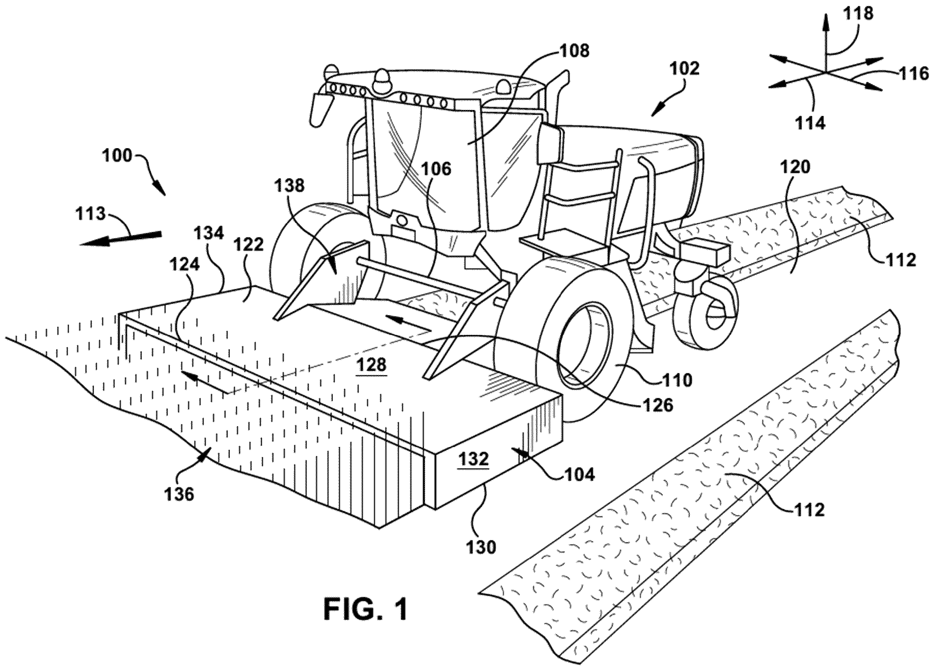

Referring initially to Fig. 1, an exemplary, non-limiting implementation of a work vehicle 100 is illustrated. In the example shown in Fig. 1, vehicle 100 may be a harvesting work vehicle, such as a windrower 100. In some embodiments, the windrower 100 may be a self-propelled machine. However, the systems and methods described herein may be equally applicable to towed machines, or other configurations, as will be appreciated by those having skill in the art. Furthermore, although harvesting work vehicles that mow, condition and windrow crop materials are sometimes interchangeably referred to as mower-conditioners, windrowers, or forage harvester, for the sake of simplicity, such machines will be referred to herein as "windrowers". Further, one or more portions of the methods and systems described herein may apply to other harvesting work vehicles or to construction and forest harvester vehicles.

Machines that collect and condition crop material, and form a windrow from the same material are discussed according to implementations of the present disclosure; however, it will be appreciated that the present teachings may apply to machines that form windrows without necessarily conditioning the crop material. The present teachings may also apply to machines that condition (crimp, crush, etc.) crop material without necessarily forming a windrow. Furthermore, the systems and methods of the present disclosure may apply to harvesting of various types of crop materials, such as grasses, alfalfa, silage, or otherwise. Accordingly, it will be appreciated that a wide variety of machines, systems, and methods may fall within the scope of the present disclosure.

In some embodiments, the windrower 100 broadly comprises a self-propelled tractor 102 and a header 104 (i.e., header attachment). The header 104 may be attached to the front of the tractor 102. The tractor 102 may include a chassis 106 and an operator compartment 108 supported atop the chassis 106. The operator compartment 108 may provide an enclosure for an operator and for mounting various user control devices (e.g., a steering wheel, accelerator and brake pedals, etc.), communication equipment and other instruments used in the operation of the windrower 100, including a user interface providing visual (or other) user control devices and feedback. The tractor 102 may also include one or more wheels 110 or other traction elements for propelling the tractor 102 and the header 104 across a field or other terrain. The windrower 100 may form a windrow 112 as it moves along a travel direction indicated by the arrow 113.

The windrower 100 may define a coordinate system, such as a Cartesian coordinate system having a longitudinal axis 114, a lateral axis 116, and a vertical axis 118. The longitudinal axis 114 may be substantially parallel to the travel direction 113. The lateral axis 116 may be horizontal and normal to the longitudinal axis 114 to extend between opposing sides of the windrower 100. The vertical axis 118 may extend vertically and normal to the longitudinal axis 114, the lateral axis 116, and the ground 120.

The header 104 may generally include a frame 122, which is mounted to the chassis 106. The frame 122 may be mounted for movement relative to the chassis 106. For example, the frame 122 may move up and down, at least partly, along the vertical axis 118 relative to the chassis 106 and relative to crop material 136. In some embodiments, the frame 122 may tilt and rotate about an axis that is parallel to the lateral axis 116. Also, the frame 122 may comprise one or more support elements for supporting the implements (i.e., arrangement of implements, etc.) described below.

The frame 122 may generally include a front end 124 and a rear end 126. The rear end 126 may be spaced apart along the longitudinal axis 114 and may be attached to the chassis 106 of the tractor 102. The frame 122 may also include a top structure 128 and a lower area 130, which are spaced apart along the vertical axis 118. Furthermore, the frame 122 may include a first lateral side 132 and a second lateral side 134, which are spaced apart along the lateral axis 116.

In the embodiment shown and discussed below, the front end 124 is open to receive crop material 136 as the tractor 102 moves across the field. In some embodiments, the windrower 100 cuts the crop material 136, then conditions the crop material, and then shapes, places and/or arranges the crop material 136 into the windrow 112 as the tractor 102 moves.

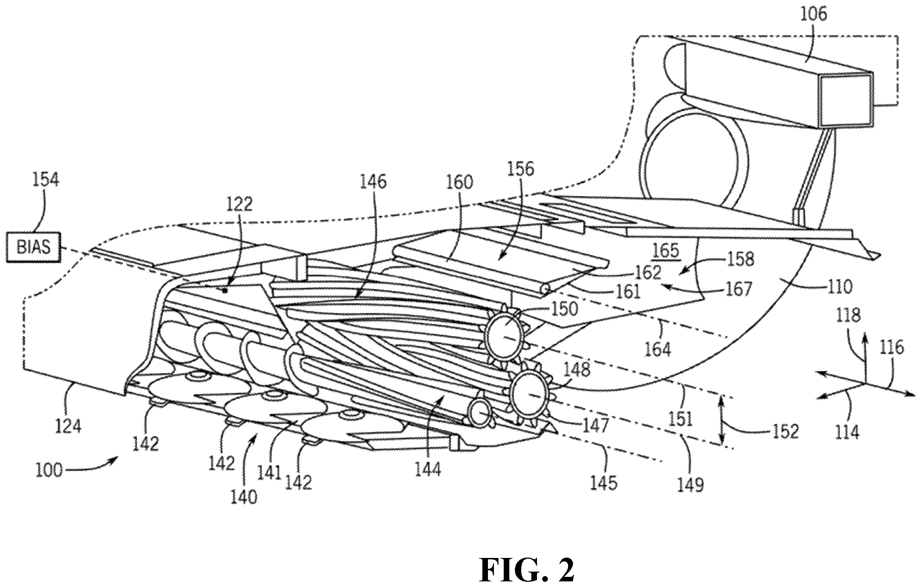

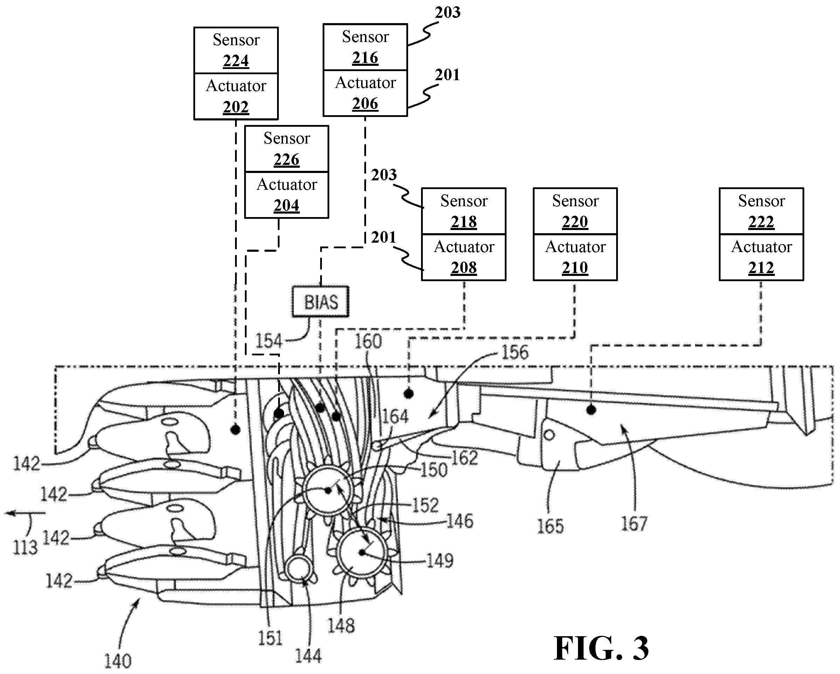

Referring now to Fig. 2 and 3, the windrower 100 may include one or more arrangements (i.e., arrangements of various implements, tools, etc.), which may be supported by the frame 122 and/or supported by the chassis 106. For example, the windrower 100 may include a cutting arrangement 140 for severing standing crop material 136 as the windrower 100 moves through the field. In some embodiments, the cutting arrangement 140 may include one or more blades 142 that are supported by a support structure 141, proximate the front end 124 of the frame 122. The cutting arrangement 140 may include rotating blades as shown in Figs. 2 and 3; however, the cutting arrangement 140 may include reciprocating sickle-like blades or other configurations without departing from the scope of this disclosure.

The windrower 100 may further include a conveyor arrangement 144. The conveyor arrangement 144 may be an auger-like roller that is mounted for rotation about an axis 145. The axis 145 may be substantially parallel to the lateral axis 116 of the windrower 100. A support structure for the conveyor arrangement 144 is not shown specifically, but may be disposed proximate the first lateral side 132 and the second lateral side 134 of the frame 122 (Fig. 1). Once the crop material 136 has been cut by the cutting arrangement 140, the conveyor arrangement 144 may convey the crop material 136 rearward (generally along the longitudinal axis 114), away from the cutting arrangement 140 for further processing. It will be appreciated that the windrower 100 may include a different type of conveyor arrangement 144 without departing from the scope of the present disclosure. For example, the conveyor arrangement 144 may comprise a conveyor belt (e.g., a draper) in some embodiments.

Furthermore, the windrower 100 may additionally include at least one conditioning arrangement 146 (i.e., crop-conditioning implement, tool, etc.). In some embodiments, the conditioning arrangement 146 may comprise a conditioner roller and a member that opposes the conditioner roller, and crop material that passes between the roller and the opposing member are crimped, crushed, or otherwise conditioned by the pressure of the roller on the opposing member. In some embodiments represented in the figures, the conditioning arrangement 146 includes a first conditioner roller 148 and a second conditioner roller 150. The first and second conditioner rollers 148, 150 may include projections 147 that project radially and that extend helically about the respective roller. As will be discussed, crop material 136 may pass between the first and second conditioner rollers 148, 150 and the projections 147 may crimp, crush, or otherwise condition the crop material 136 (e.g., the stems of the crop material 136) as it passes between the rollers 148, 150. This conditioning may promote even drying of the crop material 136 as will be appreciated by those having ordinary skill in the art.

The first conditioner roller 148 may be elongated and may extend laterally between the first side 132 and the second side 134 of the frame 122. The ends of the first conditioner roller 148 may be mounted to the frame 122 (i.e., the support structure), proximate the first side 132 and the second side 134. The first conditioner roller 148 may be mounted for rotation relative to the frame 122 about an axis 149 that is substantially parallel to the lateral axis 116. In some embodiments, the rotation axis 149 of the first conditioner roller 148 may be disposed in a substantially fixed position relative to the frame 122. Thus, the first conditioner roller 148 may be referred to as a "fixed" roller.

The second conditioner roller 150 may be substantially similar to the first conditioner roller 148. The second conditioner roller 150 may be mounted to the frame 122 at each lateral end and may rotate about an axis 151. The axis 151 may extend substantially along the lateral axis 116. The second conditioner roller 150 may be spaced apart at a distance from the first conditioner roller 148. In other words, a gap 152 may be defined between the first and second conditioner rollers 148, 150. In the illustrated embodiment, the gap 152 is indicated between the axis 149 of the first conditioner roller 148 and the axis 151 of the second conditioner roller 150. However, the gap 152 may be measured from an outer radial boundary of the first conditioner roller 148 and an opposing outer radial boundary of the second conditioner roller 150. It will be appreciated that the dimension of the gap 152 may affect conditioning of the crop material 136 that passes between the first and second conditioner rollers 148, 150.

In addition to rotation about the axis 151, the second conditioner roller 150 may be supported for movement (linear or angular) relative to the first conditioner roller 148 to vary the dimension of the gap 152. In some embodiments, the second conditioner roller 150 may move at least partially along the vertical axis 118 relative to the first conditioner roller 148.

In the illustrated embodiment of Figs. 2 and 3, the first and second conditioner rollers 148, 150 are shown at a neutral position relative to each other. The second conditioner roller 150 may be supported to move away from this neutral position (to a displaced position) to thereby increase the gap 152. In some embodiments, the conditioning arrangement 146 may further include at least one biasing member 154 (shown schematically). The biasing member 154 may be of any suitable type, such as a mechanical spring, a hydraulic biasing member, etc. The biasing member 154 may be mounted to the frame 122 and to the first and/or second conditioner roller 148, 150. More specifically, in some embodiments, the biasing member 154 may be mounted to the frame 122 and the second conditioner roller 150 such that the biasing member 154 biases the second conditioner roller 150 relative to the frame 122. The biasing member 154 may bias the second conditioner roller 150 toward the neutral position. Biasing force provided by the biasing member 154 may be relatively high so as to maintain the gap 152 (i.e., maintain the first and second conditioner rollers 148, 150 at the neutral position) as the crop material 136 moves through the conditioning arrangement 146. However, a large slug of crop material 136, rocks, or other objects may force the second conditioner roller 150 away from the first conditioner roller 148 against the biasing force of the biasing member 154, thereby increasing the gap 152. Once the material has cleared from between the first and second conditioner rollers 148, 150, the biasing member 154 may bias the second conditioner roller 150 back toward the neutral position.

The windrower 100 may further include at least one windrowing arrangement (i.e., windrow-shaping implement, tool, etc.) that is configured to shape, arrange, or otherwise form a windrow of the crop material 136. For example, as shown in Figs. 2 and 3, the windrower 100 may include a first windrowing arrangement 156 (e.g., swath flap arrangement) and a second windrowing arrangement 158 (e.g., forming shield arrangement). In some embodiments, the first windrowing arrangement 156 may comprise a so-called swath flap 162 (i.e., swath board). Also, in some embodiments, the second windrowing arrangement 158 may comprise so-called forming shields 167.

As illustrated, the first windrowing arrangement 156 may include a support structure 160, such as a transversely extending tube, that is attached to the frame 122 at both ends. The first windrowing arrangement 156 may also include a swath flap 162. The swath flap 162 may be an elongated member that extends substantially along the lateral axis 116. The first windrowing arrangement 156 may be mounted to the support structure 160 and may extend rearward therefrom. The swath flap 162 may include a substantially wide, flat, and smooth deflecting surface 161. The swath flap 162 may be supported for rotation about a transverse axis 164 of the support structure 160 to change an angle of the surface 161 with respect to the ground. In some examples, the swath flap 162 may rotate between a raised position and a lowered position to change the position of the deflecting surface 161 relative to the crop material 136 received from the conditioning arrangement 146.

The second windrow shaping implement 158 may include at least one forming shield 167. The forming shield 167 may be substantially wide, flat, and smooth and may include at least one deflecting surface 165. The deflecting surface 165 may include a leading end 170 and a trailing end 172. The second windrow shaping implement 158, may include a first shield 166 and a second shield 168, each with a respective deflecting surface 165. The first shield 166 may be mounted proximate the first side 132 of the frame 122, and the second shield 168 may be mounted proximate the second side 134 of the frame 122. The deflecting surfaces 165 of the first and second shields 166, 168 may face each other and may converge rearward for shaping the crop material 136 into the windrow 112. The leading end 170 of the shields 166, 168 may flare outwardly to a slight extent, while the lower rear margins proximate the trailing end 172 may curl slightly inwardly. In other words, the deflecting surfaces 165 may cooperate to form a somewhat funnel-shaped passage to taper down the stream of crop material 136 issuing from the conditioning arrangement 146 and impinging upon the first and second shields 166, 168.

In some embodiments, the first and second shields 166, 168 may be supported for rotation about a vertical axis (i.e., an axis substantially parallel to the vertical axis 118). The first and second shields 166, 168 may be moved to change the amount of convergence provided by the shields 166, 168. The shields 166, 168 may rotate between a first position and a second position to change the amount of tapering of the deflecting surfaces 165 along the longitudinal axis 114. The shields 166, 168 may cooperate to define a wider funnel-like shape in the second position as compared to the narrower first position. The shields 166, 168 may be moved in a coordinated manner such that the windrow is formed generally along a longitudinal axis of the windrower 100. In some embodiments, one of the shields 166, 168 may be shifted closer to the longitudinal axis than the other shield 166, 168 such that the windrow is formed to one side of the longitudinal axis. Other movements of the shields 166, 168 also fall within the scope of the present disclosure.

If the swath flap 162 of the first windrowing arrangement 156 is raised and the shields 166, 168 are disposed in the first position, the stream may bypass the swath flap 162 and may be acted upon by the shields 166, 168 to form the windrow 112 in accordance with the position of the shields 166, 168. On the other hand, if the swath flap 162 is lowered and the shields 166, 168 are in the second position, the stream may be intercepted by the swath flap 162 and directed down to the ground without engaging the shields 166, 168. In some embodiments, in the first position, the windrow 112 may be formed narrower and more densely with crop material 136, and in the second position, the windrow 112 may be formed wider and less densely. However, it will be appreciated that the width, shape, or other characteristic of the windrow 112 may be controlled in other ways.

As shown in FIG. 3, the windrower 100 may additionally include an actuator system. The actuator system 174 may include at least one actuator, such as an electric motor, a hydraulic actuator, or a pneumatic actuator of a known type. The actuator(s) may be configured for actuating the various implements discussed above. In some embodiments, at least one actuator may be a linear actuator with a first member and a second member that actuates linearly with respect to the first member. The first member may be fixed to the frame 122 and/or the chassis 106, and the second member may be fixed to the respective implement. Thus, the second member and the respective implement may actuate together with respect to the first member. Also, in some embodiments, linear actuation of the actuator may rotate the respective implement about its axis of rotation. In some embodiments, all or most of the actuators of the actuator system are linear actuators. Furthermore, actuators of the actuator system may include integrated sensors and may be interconnected to a control system via a CAN bus connection or otherwise. In some embodiments, a suitable switch may be provided in the operator compartment 108 of the tractor 102 for providing a user input for actuating the actuator. In additional embodiments, the actuators may be in communication with a controller that automatically actuates the actuator. Accordingly, the actuators may be reliable, highly programmable, and may provide accurate and controlled movement of the implement. Also, in some embodiments, the actuators may provide position feedback data that corresponds to the actual and current position of the implement as will be discussed in greater detail below.

As shown in Fig. 3, the actuator system may include at least one first actuator 201, which is operably coupled to the conditioning arrangement 146 and is configured for varying one or more parameters of the conditioning arrangement 146. In some embodiments, there may be a plurality of first actuators 201 for changing settings, variable parameters, etc. for the conditioning arrangement 146. The first actuators 201 may include a gap-adjustment actuator 208 and a bias-adjustment actuator 206. Additionally, in some embodiments, the first actuators 201 may include additional actuators configured for rotating the conditioner rollers 148, 150 about their respective axes of rotation 149, 151.

More specifically, there may be at least one gap-adjustment actuator 208 that is configured for changing the gap 152 between the first and second conditioner rollers 148, 150. In some embodiments, the gap-adjustment actuator 208 may be operably connected to the frame 122 and the second conditioner roller 150, and the gap-adjustment actuator 208 may be configured to move the second conditioner roller 150 relative to the frame and relative to the first conditioner roller 148. As such, the gap-adjustment actuator 208 may selectively vary the dimension of the roll gap 152 at the neutral position of the first and second conditioner rollers 148, 150. In additional embodiments, the gap-adjustment actuator 208 may move the first conditioner roller 148 instead of or in addition to the second conditioner roller 150 to vary the gap 152.

The bias-adjustment actuator 206 may be operably coupled to the biasing member 154, and may be configured for selectively varying the biasing force that the biasing member 154 provides (e.g., the biasing force provided to the second conditioner roller 150) at the neutral position. For example, the bias-adjustment actuator 206 may actuate to change the length of the biasing member 154 when the conditioning arrangement 146 is in the neutral position to thereby vary the biasing force provided by the biasing member 154. In cases of a hydraulic biasing member, the bias-adjustment actuator 206 may change a fluid pressure for changing the biasing force.

Furthermore, the actuator system may include at least one second actuator 210. The second actuator 210 may be operably coupled to the swath flap 162 for rotating the swath flap 162 about the axis 164. For example, the second actuator 210 may move the swath flap 162 between the raised position and the lowered position.

Additionally, the actuator system may include at least one third actuator 212. The third actuator 212 may be operably coupled to one or both forming shields 167. The third actuator 212 may be configured for moving the forming shields 167 between the first position and the second position. In some embodiments, each forming shield 167 may respectively include an independent third actuator 212 such that the forming shields 167 may articulate independent of each other relative to the frame 122 of the windrower 100.

Moreover, the actuator system may include at least one fourth actuator 202. The fourth actuator(s) 202 may be operably coupled to the cutting arrangement 140 for actuating the blades 142 in some embodiments. Also, in some embodiments, the fourth actuator(s) 202 may be operably coupled to the conveyor arrangement 144 for rotating the conveyor arrangement 144. In another implementation, at least one fifth actuator 204 may be operably coupled to the conveyor arrangement 144. That is the cutting arrangement 140 and the conveyor arrangement 144 are operably coupled to independent actuators 202 and 204, respectively. The at least one-fifth actuator 204, may be configured to rotate the conveyor arrangement 144 and/or to position the conveyor arrangement 144.

In further embodiments, the fourth actuator(s) 202 may be operably coupled to the frame 122 for controlled lifting and lowering of the frame 122 relative to the chassis 106 of the tractor 102. The fourth actuator(s) 202 may also rotate the wheels 110 of the tractor 102 or actuate another component. In this regard, the fourth actuator(s) 202 may receive power from a power plant, such as a diesel engine, an electrical power source, a hydraulic pump, etc.

In some embodiments, the first, second, and third actuators 201, 210, and 212 may re-configure, shift, and re-position the second conditioner roller 150, the swath flap 162, and/or the forming shields 167 on-demand by the user using user controls in some embodiments. These components may be shifted between the first positions and the second positions described herein. Also, these components may be shifted to various intermediate positions therebetween. Thus, the windrower 100 may be configured for windrowing/swathing quickly and easily while the windrower 100 is moving across a field and without the operator leaving the operator compartment 108.

The actuators 201, 210, and 212 may be stopped at any one of numerous positions by the operator without leaving the operator compartment 108. Accordingly, the amount of conditioning (i.e., the amount of crimp or compression) of the crop material 136 may be adjusted by moving the second conditioner roller 150 and changing the gap 152. Also, the amount of conditioning may be adjusted by changing the biasing force of the biasing member 154. Furthermore, the shape, arrangement, density, or other characteristic of the windrow 112 may be quickly and easily adjusted by moving the swath flap 162 and/or the forming shields 167. For example, the operator may choose to form a wider windrow 112 such that the crop material 136 dries more quickly. Similarly, if the freshly cut crop material 136 is wetter than normal, the windrow 112 may be made wider for increased drying. Conversely, the windrow 112 may be made more narrow in consideration of subsequent processing that is to occur (e.g., chopping, raking, gathering, or other processing of the crop material 136 within the windrow 112). Also, the windrow 112 may be made more narrow and dense, for example, to avoid excessive sun bleaching of the crop material 136 within the windrow 112.

As shown in Fig. 3, the windrower 100 may additionally include a sensor system. The sensor system 184 may include one or more sensors that, for example, detect conditions related to the cutting arrangement 140, the conveying arrangement 144, the conditioning arrangement 146, the swath flap 162, and/or the forming shields 167. In some embodiments, the sensors may detect an actual (current) position or other setting (e.g. speed, motor load, motor pressure) of the cutting arrangement 140, the conveying arrangement 144, the conditioning arrangement 146, the swath flap 162, and/or the forming shields 167 as will be discussed. Other sensors may be included as well for detecting conditions related to the windrowing operations as discussed below.

The sensors of the sensor system may be of any suitable type. For example, sensors may include a potentiometer, a Hall Effect sensor, a proximity sensor, a microelectromechanical sensor (MEMS), a laser, an encoder, an infrared sensor, a camera, or other type. The sensors of the sensor system may be integrated sensors, which are combined or "integrated" with signal processing hardware in a compact device. The sensors of the system may also be operably connected to corresponding actuators of the actuator system for gathering data therefrom. In some embodiments, these sensors may detect a position or speed of an implement by detecting an electrical, magnetic, or other visual condition that is related to the position of the implement. Additionally, the sensor system may include one or more components that, for example, communicate with a global positioning system (GPS) that provides sensor input regarding the current position of one or more of the implements. The sensor input may be associated with stored data, such as maps, geo-coordinate markers, and so on, to reconcile the real-time machine and implement position in three-dimensional space with known objects and locations of a preset field.

Also, in some embodiments, the sensors may be incorporated within one of the actuators within the actuator system 174. Furthermore, while some sensors may be mounted to the windrower 100, other sensors of the sensor system may be remote from the windrower 100 as will be discussed.

As shown in Fig. 3, the sensor system may include at least one first sensor 203, which is operably coupled to the conditioning arrangement 146 and/or the first actuator(s) 201. The first sensors 203 may include a roller sensor 218 that is configured for detecting the position of the first and/or second roller 148, 150. The roller sensor 218 may also be configured for detecting the actual (current) dimension of the gap 152 between the first and second conditioner rollers 148, 150. The roller sensor 218 may also be configured for detecting the gap 152 as it changes over a predetermined time period. In other words, the roller sensor 218 may detect a dynamic position of the second conditioner roller 150 relative to the first conditioner roller 148. Furthermore, in some embodiments, the first sensors 203 may include a bias sensor 216 configured to detect the biasing load provided by the biasing member 154. Additionally, in some embodiments, the first sensors 203 may include a sensor that detects the angular speed or other related condition of the first and second conditioner rollers 148, 150.

The sensor system may further include at least one second sensor 220. The second sensor 220 may be operably coupled to the swath flap 162 in some embodiments. The second sensor 220 may detect the actual (current) position of the swath flap 162. For example, the second sensor 220 may detect the angle of the deflecting surface 161 relative to the frame 122 and/or relative to the ground.

Additionally, the sensor system may include at least one third sensor 222. The third sensor 222 may be operably coupled to one or more of the forming shields 167. The third sensor 222 may detect the position of the shields 167 with respect to each other, with respect to the frame 122, and/or with respect to the chassis 106.

Moreover, the sensor system may include at least one fourth sensor 224. In some embodiments, the fourth sensor 224 may be operably coupled to the cutting arrangement 140 for detecting the cutting speed of the blades 142. In additional embodiments, a fifth sensor 226 may be operably coupled to the conveyor arrangement 144 for detecting the angular speed of the conveyor arrangement 144. The fourth sensor 224 and/or the fifth sensor 226 may also be configured for detecting other conditions of the windrower 100 and/or tractor 102. For example, the fourth sensor 224 and/or the fifth sensor 226 may be configured as a speedometer that detects the ground speed of the tractor 102. The fourth sensor 224 and/or the fifth sensor 226 may also detect the current position of the frame 122 of the windrower 100 relative to the chassis 106 in some embodiments.

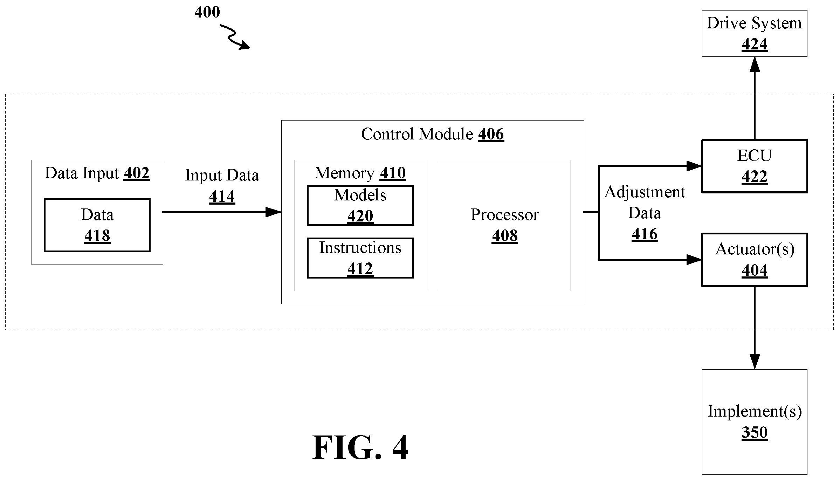

Fig. 4 illustrates an exemplary, non-limiting implementation of a system 400 for a vehicle according to various aspects. In one example, system 400 may be implemented by the vehicle of Figs. 1-3 (e.g. windrower 100). In the exemplary implementation shown in Fig. 4, the system 400 includes a data input component 402, such as a database, crop model, user interface, cloud-based data, etc., (e.g., disposed remotely or in vehicle). The data input component 402 may also comprise a sensor array comprising one or more sensors to detect various conditions of components of the vehicle, such as the sensors described above and sensors that detect loads on various motors (e.g. auger motor, cutter motor, header motor, conditioner motor, conditioning roller motors, etc.) as described herein.

In Fig. 4, the input component 402 creates, includes, or receives data related to implements 350 such as cutting arrangement 140 or conditioning arrangement 146. As utilized herein, the cutting arrangement 140 may also be referred to as a cutter, cutter bar, or a header - particularly when using motor load. Further, the conditioning arrangement 146 may also be referred to as a conditioner.

For example, according to an aspect, the data input component 402 collects the input data 414 indicative of the downforce applied to the first and/or second roller of the conditioning arrangement by the biasing means of the conditioning arrangement and the position of the first and/or second rollers. The downforce may be indicative of a pressure applied to the crop material by the first and/or second rollers as the crop material moves through the gap between the first and second rollers. Therefore, the downforce may be indicative of the conditioning level and operating status of the conditioning arrangement. Alternatively, the input data 414 may be indicative of respective loads on a header (or cutter) motor and a conditioner motor. The load may be indicative of a pressure on the motor, a force output to maintain a particular reciprocal or rotational speed, and/or a power input to the motor. As noted above, respective loads on the header motor and conditioning motor may be indicative of a conditioning performance level. Therefore, input data 414 can include a load of a header motor (from a sensor associated with the header motor) and a load of a conditioner motor (from another sensor associated with the conditioner motor).

In Fig. 4, the example system 400 includes a control module 406 that is configured to receive the input data 414 and transmits adjustment data 416. For example, the control module 406 comprises a computer processor 408 that is configured to process data and instructions, and provide resulting data based on the processed data and instructions Additionally, the control module 406 comprises memory 410 (e.g., computer memory, such as a device or system that is used to store information for use in a computer or related computer hardware and digital electronic devices, including short and long-term memory, temporary and permanent memory, and the like).

In this implementation, the memory 410 stores instructions 412 that are configured to, when processed by the computer processor 408, generate a conditioning performance index indicative of level of conditioning being performed on a crop based on the input data 414 and generate adjustment data 416 indicative of an adjustment to one or more of implements 350, or to a drive system 424, to improve conditioning performance. Memory 410 may also store models 420, which may be configured thresholds utilized to determine the conditioning performance index based on input data 414 or trained machine learning models. Models 420 may be crop specific such that different types of crop have associated machine learning models or configured thresholds.

In the example system 400, one or more actuators 404 can be used to adjust one or more implements 350 of a vehicle to improve conditioning performance. Actuators 404 can include any of actuators 202, 204, 206, 208, 210, and/or 212 described above with reference to Fig. 3. In addition, an ECU 422 associated with a vehicle drive system 424 can be signaled to effect a change in a vehicle or engine speed.

According to some examples, the conditioning performance level or operating status may indicate normal conditioning, under-conditioning, over-conditioning, gap too big, or gap too small. Over-conditioning may be resolved by increasing a roll gap and/or reducing a vehicle speed. Under-conditioning may be resolved by decreasing a roll gap and/or increasing a vehicle speed. Gap too big may be resolved by decreasing a roll gap and/or increasing a vehicle speed. Gap too small may be resolved by increasing a roll gap and/or decreasing a vehicle speed. Adjustment data 416 may include signals or commands to actuators 404 and/or ECU 422 to adjust the roll gap and/or adjust the speed of the vehicle.

Further control scenarios may be available through separate and independent actuators for at least the cutter bar, the auger, and/or the conditioner as shown in Fig. 3.

In another aspect, control module 406 can acquire a position of the vehicle. The position, together with determined conditioning performance indices as various times, is utilized to generate a conditioning map. The conditioning map indicates a conditioning performance at various locations in an area (e.g. a field). In an example, sensor signals (e.g. loads on the header motor and/or loads on a conditioner motor) may be continuously collected for a period of time corresponding to a traversal time for an interval. The signals are aggregated over the interval. An area (e.g. field) may be partitioned into a plurality of intervals. A location of each interval may be determined from the acquired position of the vehicle. In another example, the control module 406 polls sensors with a period corresponding to the interval (e.g. once per interval, twice per interval, ... N-times per interval where N is any integer greater than or equal to one).

While collecting data from sensors, the control module 406 acquires positioning signals from a global navigation satellite system (GNSS) or other positioning system. A position of the agricultural machine or vehicle may be acquired for each interval. In one aspect, the interval may be configured based on a resolution of positioning.

Control module 406 associates, for each interval, the conditioning performance index determined from input data from sensors with a position acquired. Thus, once the association is made for each interval, control module 406 generates the set of data that includes conditioning performance indices per interval over the crop field combined with respective locations of each interval. The set of data may be a map that may be indicative of the conditioning performance over a harvested area in combination with acquired location information.

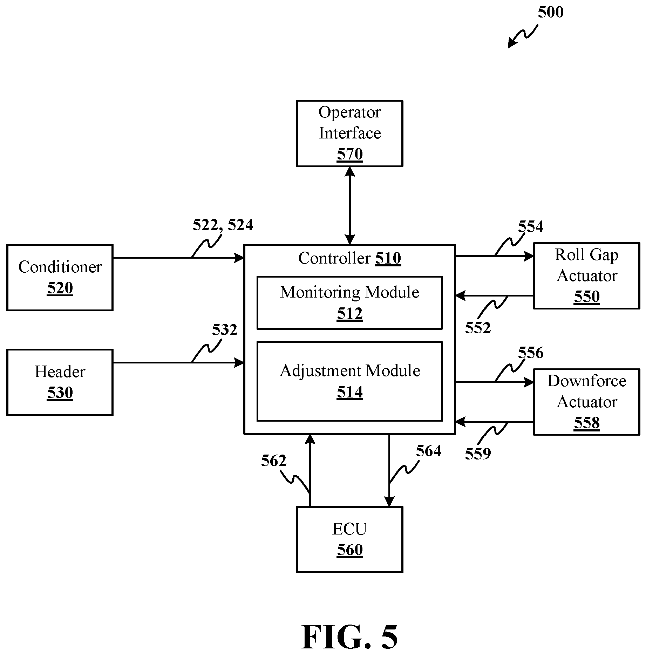

Turning now to Fig. 5, illustrated is a schematic block diagram of a control system 500 according to various aspects. Control system 500 may be implemented by the work vehicle or windrower 100 described herein. As shown in Fig. 5, system 500 includes a controller 510 and some implements or components of vehicle 100 such as a conditioner 520, a header or cutter 530, a roll gap actuator 550, an engine control unit 560, and an operator interface 570. Operator interface 570 may include various types of different operator interface mechanisms that generate outputs for an operator and allow an operator to provide inputs to control a machine. Controller 510 may include functional modules such as a monitoring module 512 and adjustment module 514. In an example, the functional modules may be implemented by computer-executable instructions that are executed by at least one computer processor of control system 510.

According to an example, monitoring module 512 can receive input such as a conditioner motor load 522 or a downforce 524 from the conditioner 520 and a header or cutter bar motor load 532 from header 530. With these inputs, the monitoring module 512 determines and monitors a conditioning performance of the agricultural machine or vehicle harvesting crop. The monitoring module 512 may be configured with predetermined values for the downforce and/or loads, one or more threshold values for the downforce and/or loads, and machine learning models that identify a conditioning performance based on monitored downforce and/or motor loads. Monitoring module 512 may determine whether received downforces or motor loads are within configured nominal ranges, below nominal ranges, or above nominal ranges. Monitoring module 512 can determine a conditioning performance as described above. For instance, monitoring module 512 can indicate conditioning performance or the operating status of the conditioner 520. In some implementations, the conditioning performance or operating status indicates normal conditioning, under-conditioning, over-conditioning, gap too big, or gap too small.

In response to conditioning performance, the adjustment module 514 determines adjustment data and/or control signals to one or more implements or components of the vehicle. For instance, adjustment module 514 may generate controls signals or commands for actuators of implements or components. Such signals may include a roll gap actuator command or signal 554 to adjust a roll gap maintained by roll gap actuator 550, downforce actuator command or signal 556 to adjust the downforce maintained by a downforce biasing means and downforce actuator 558, and/or an engine speed command 564 to ECU 560 to adjust an engine speed (and by extension a vehicle speed). Further, adjustment module 514 may provide output to operator interface 570 to inform an operator of adjustments to be made either automatically or manually. In generating the adjustment data and/or control signals, the adjustment module 514 may receive inputs such as a position or status 552 of roll gap actuator 550, position or status 559 of the downforce actuator, and/or a current engine speed 562 from ECU 560.

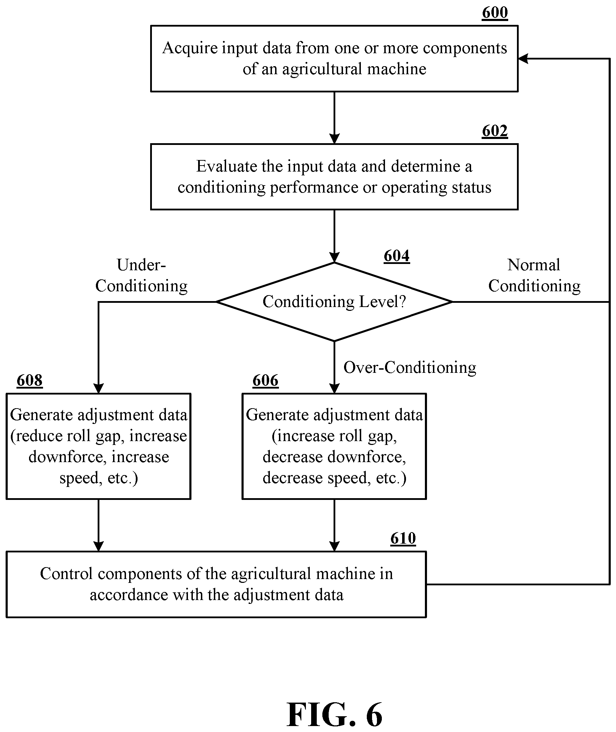

Turning to Fig. 6, various features and operations of the systems described above are illustrated with an exemplary flowchart. The example in this figure are illustrative of some features of systems 400 and 500, and vehicle 100, but is not exhaustive. In Fig. 6, an exemplary, non-limiting implementation for monitoring and controlling conditioning performance of an agricultural machine (e.g. an agricultural vehicle or windrower) is illustrated.

The method can begin at 600 where input data from one or more components of an agricultural machine are acquired. The input data may be a downforce applied to the first and/or second roller of a conditioner, respective loads, pressure on a header motor and a conditioner motor, or positioning data of the rollers. At 602, the input data is evaluated and a conditioning performance index or operating status of the conditioner is determined. The conditioning performance index indicates a level of conditioning or operating status such as, but not limited to, normal conditioning, over-conditioning, under-conditioning, gap to big, or gap too small.

At 604, the method branches based on the conditioning level determined. For instance, if over-conditioning is determined, the method transitions to 606, where adjustment data is generated. In an example, for over-conditioning, the adjustment data may indicate an increase in roll gap and/or a decrease in vehicle speed. If under-conditioning is determined, the method transitions to 608, where adjustment data for under-conditioning is generated. For example, the adjustment data may indicate a decrease in roll gap and/or an increase in vehicle speed. At 610, after either step 606 or 608, components of the agricultural machine are controlled in accordance with the adjustment data. For instance, an ECU is controlled to adjust a speed of the vehicle. In another example, a roll gap actuator is controlled to adjust a roll gap. In another example, a biasing means actuator is controlled to adjust a downforce generated by a biasing means and applied to the first and/or second roller of a conditioner. After adjusting components, or in the case of normal conditioning, the method may return to 600 to continue monitoring of conditioning performance.

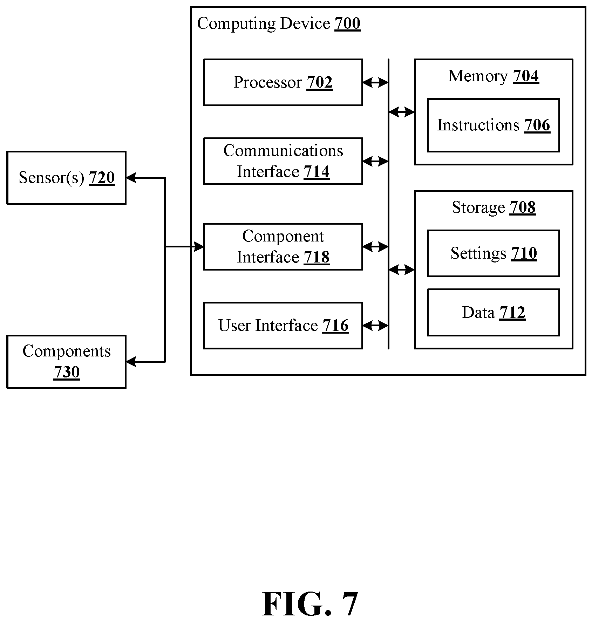

Turning to Fig. 7, illustrated is a schematic block diagram of an exemplary, non-limiting implementation for a computing device 700. Computing device 700 may be utilized to implement system 400, control module 406, controller 510, or other controller of an agricultural machine. Computing device 700 includes a processor 702 configured to execute computer-executable instructions 706 such as instructions composing a control system to monitor and adjust conditioning performance as described herein. Such computer-executable instructions 706 can be stored on one or more computer-readable media including non-transitory, computer-readable storage media such as memory 704. Memory 704 can also include other data (working data, sensor data, adjustment data, input data, or variables) or portions thereof during execution of instructions 706 by processor 702.

The computing device 700 can also include storage 708 that can be, according to an embodiment, non-volatile storage to persistently store instructions 706, settings 710 (e.g. configuration settings) and/or data 712 (e.g., operational data, sensor data, adjustment data, input data, machine inputs, etc.).

The computing device 700 may also include a user interface 716 that comprises various elements to obtain user input and to convey user output. For instance, user interface 716 can comprise of a touch display, which operates as both an input device and an output device. In addition, user interface 716 can also include various buttons, switches, keys, etc. by which a user can input information to computing device 700; and other displays, LED indicators, etc. by which other information can be output to the user. Further still, user interface 716 can include input devices such as keyboards, pointing devices, and standalone displays.

The computing device 700 further includes a communications interface 714 to couple computing device 700, via the communications network, to various devices such as, but not limited to, other computing devices 700, work vehicles, agricultural machines, sensors, drive systems, other controllers, servers, sensors, or Internet-enabled devices (e.g., IoT sensors or devices). Communication interface 714 can be a wired or wireless interface including, but not limited, a Wi-Fi interface, an Ethernet interface, a Bluetooth interface, a fiber optic interface, a cellular radio interface, a satellite interface, etc.

A component interface 718 is also provided to couple computing device 700 to various components such as sensors 720, implements 730, and/or other components of work vehicles. Component interface 718 can include a plurality of electrical connections on a circuit board or internal bus of computing device 700 that is further coupled to processor 702, memory 704, etc. Component interface 718, in another embodiment, can be an interface for a CAN bus of work vehicle. Further, the component interface 718 can implement various wired or wireless interfaces such as, but not limited to, a USB interface, a serial interface, a Wi-Fi interface, a short-range RF interface (Bluetooth), an infrared interface, a near-field communication (NFC) interface, etc.

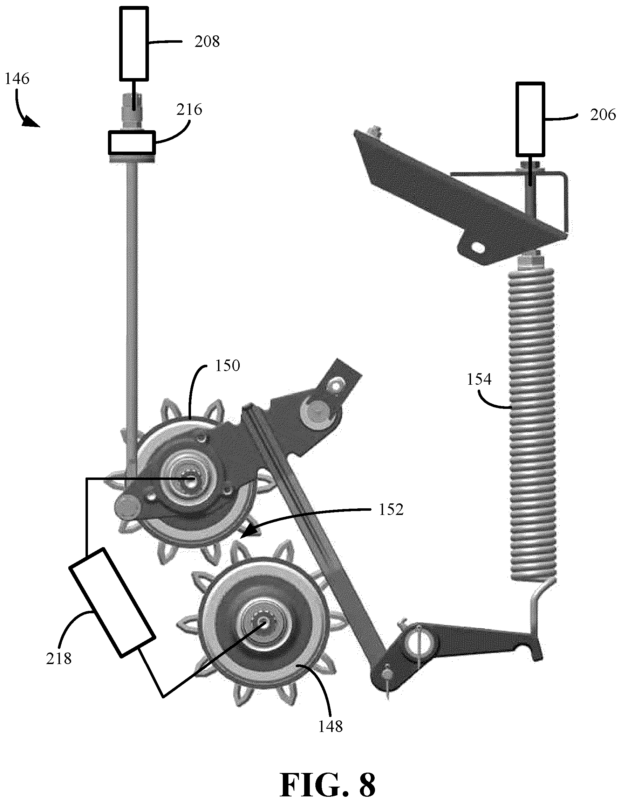

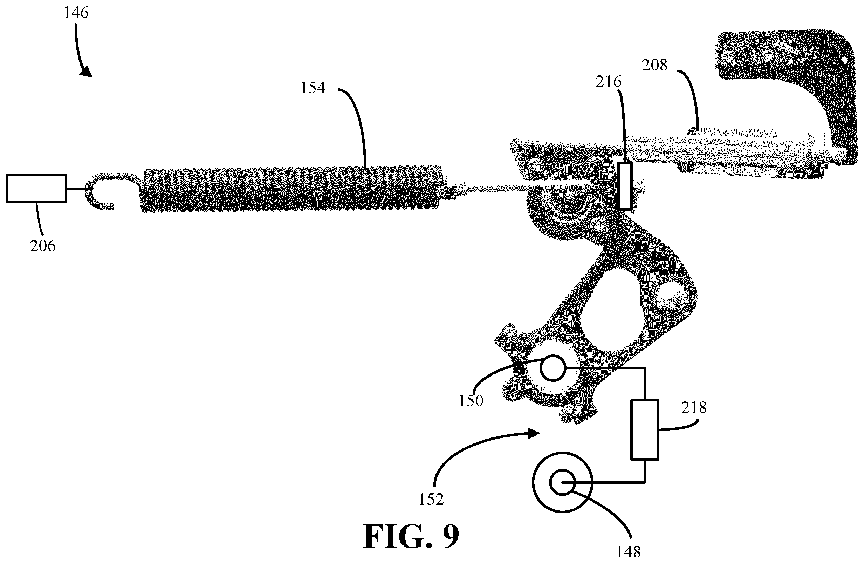

In an implementation of the windrower 100, and with reference to Figs. 8 and 9, the conditioning arrangement 146 has a roller sensor 218 operably coupled to the first and second conditioner rollers 148, 150. The roller sensor 218 is configured for detecting the position of the first and second conditioner rollers 148, 150 relative to each other to determine the gap 152 between the first and second conditioner rollers 148, 150. Alternatively, it will be appreciated that the roller sensor 218 may be operatively coupled to just the second conditioner roller 150, and the roller sensor 218 may be configured to determine the gap 152 based on the absolute position of the second roller 150 on the conditioning arrangement 146. As an example, the roller sensor 218 may be a linear potentiometer sensor or some other suitable position sensor. The roller sensor 218 may detect dynamic and real-time movement of the first roller 148 and/or second rollers 150 as crop material 136 moves between the first and second rollers 148, 150. The conditioning arrangement 146 may also include a bias sensor 216 operatively coupled to biasing member 154 and configured to detect the biasing force applied to the first and second rollers 148, 150 by the biasing member 154. For example, the bias sensor 216 may be a strain gauge operatively coupled to a rod of the biasing member 154, a load cell or force sensor operatively coupled in series with the biasing member 154, or some other suitable sensor capable of detecting tension forces. The bias sensor 216 may detect dynamic and real-time changes in bias applied to the first and second rollers 148, 150 by the biasing member 154 as crop material 136 moves between the first roller 148 and/or second rollers 150. At rest, the bias sensor 216 will detect a static bias force, for instance a spring force, applied to the first roller 148 and/or second rollers 150. As crop material 136 move between the first and second rollers 148, 150, the crop material 136 generates a counter force until the bias sensor 216 shows the bias force is at zero. Therefore, when the bias force is at zero, all of the bias force is applied to the crop material 136 passing between the first and second rollers 148, 150.

In this implementation, the windrower has system 400 that includes a control module 406 that is configured to receive the input data 414 and transmits adjustment data 416, as previously described. The computer processor 408 processes the input data 414 from the roller sensor 218 and the bias sensor 216 and determines the level of conditioning of the crop material 136 moving between the first roller 148 and/or second rollers 150 or the operating status of the conditioning arrangement 146. It will be appreciated that the computer processor 408 may process input data from just the roller sensor 218, just the bias sensor 216, or both the roller sensor 218 and the bias sensor 216 together to determine the level of the crop conditioning of the crop material 136 moving between the first roller 148 and/or second rollers 150. Upon determination of the crop conditioning level and/or the operating status of the conditioning arrangement, the control module 406 may transmit adjustment data 416 to correct the current conditioning level or operating status of the conditioning arrangement 146. In one implementation, the adjustment data 416 can be transmitted as instructions to an operator of the windrower 100 to manually adjust the gap 152. In another implementation, the adjustment data 416 can be transmitted as instructions to an operator of the windrower 100 to adjust the gap 152 with an actuator operatively coupled to the first roller 148 and/or second rollers 150 using a user-interface. In another implementation, the adjustment data 416 can be transmitted to an actuator operatively coupled to the first roller 148 and/or second rollers to automatically adjust the gap 152. Alternatively, it will be appreciated that the adjustment data 416 can transmit to an actuator operatively coupled with the biasing member 154 to adjust the biasing force.

The computer processor 408 may determine the crop conditioning level or the operating status of the conditioning arrangement 146 as one of the following: ideal crop flow and conditioning, over-conditioning, under-conditioning, roll gap too big, roll gap too small. The ideal crop flow and conditioning status can be detected when the crop material 136 moves between the first roller 148 and/or second rollers 150 and is sufficiently crushed and conditioned as one skilled in the art would understand. An operator can set the roll gap 152. During this status, the roll sensor 218 may detect the roll gap 152 consistently and smoothly varies between an acceptable threshold value around 50% or lower of the full open value of the gap 152. For instance, the roll sensor 218 may detect the roll gap is 10mm +/- 5mm as the crop material 136 moves between the first and second rollers 148, 150. Simultaneously, the bias sensor 216 may detect the bias force is zero with occasional slight increases in bias force as the crop material 136 moves between the first and second rollers 148, 150. If the computer processor 408 determines the conditioning arrangement is operating at ideal crop flow and conditioning, no adjustment data 416 is transmitted.

The over-conditioning status can be detected when the crop material 136 moves between the first roller 148 and/or second rollers 150 and is crushed and conditioned too much as one skilled in the art would understand. Typically, when crop is over-conditioned the first and second rollers 148, 150 chop or cut the crop material 136 into smaller pieces that can be lost during later processing like forming windrows, drying, or baling. During this status, the roll sensor 218 may detect the roll gap 152 does not change. For instance, the roll sensor 218 may detect the roll gap is the operator set value as the crop material 136 moves between the first and second rollers 148, 150. Simultaneously, the bias sensor 216 may detect the bias force is always some value between the static bias force and zero as the crop material 136 moves between the first and second rollers 148, 150. The bias sensor 216 may never indicate the bias force is zero. If the computer processor 408 determines the conditioning arrangement is over-conditioning the crop material, adjustment data 416 can be transmitted to the operator or respective actuators to increase the roll gap 152 or decrease the bias force applied to the first roller 148 and/or second rollers by the biasing member 154.

The under-conditioning status can be detected when the crop material 136 moves between the first roller 148 and/or second rollers 150 and is not sufficiently crushed and conditioned, as one skilled in the art would understand. During this status, the roll sensor 218 may detect the roll gap 152 stays at a fully open position. For instance, the roll sensor 218 may detect the roll gap is 10mm or higher and does not vary at all as the crop material 136 moves between the first and second rollers 148, 150. Simultaneously, the bias sensor 216 may detect the bias force is always zero as the crop material 136 moves between the first and second rollers 148, 150. If the computer processor 408 determines the conditioning arrangement is under-conditioning the crop material, adjustment data 416 can be transmitted to the operator or respective actuators to decrease the roll gap 152 or increase the bias force applied to the first roller 148 and/or second roller 150 by the biasing member 154.

The gap too big status can be detected when the crop material 136 moves between the first roller 148 and/or second rollers 150 and may indicate inconsistent feeding of the crop material or slug feeding. It may produce underconditioned crop materials. During this status, the roll sensor 218 may detect the roll gap 152 rapid large displacements of the roll gap 152 as the crop material 136 moves between the first and second rollers 148, 150. Simultaneously, the bias sensor 216 may detect the bias force frequently varies between the static bias force and zero as the crop material 136 moves between the first and second rollers 148, 150. If the computer processor 408 determines the conditioning arrangement has a gap too big operating status, adjustment data 416 can be transmitted to the operator or respective actuators to decrease the roll gap 152 or increase the bias force applied to the first roller 148 and/or second rollers by the biasing member 154. Additionally, the feed of the crop material 136 to the conditioning arrangement 146 can be altered.

The gap too small status can be detected when the crop material 136 moves between the first roller 148 and/or second rollers 150 and may indicate a build-up of crop material 136 on the first and second rollers 148, 150. When the conditioning arrangement operates in a gap too small operational status, the first roller 148 and the second roller 150 may crash into each other, which can lead to damage to the conditioning arrangement 146. During this status, the roll sensor 218 may detect the roll gap 152 performing similar to ideal settings despite the crop material 136 being poorly conditioned because the crop material is not being fed through the first and second rollers 148, 150 correctly. Simultaneously, the bias sensor 216 may detect the bias force rapid variances in the bias for and chatter from the first and second rollers 148, 150 crashing into each other. If the computer processor 408 determines the conditioning arrangement has a gap too small operating status, adjustment data 416 can be transmitted to the operator or respective actuators to increase the roll gap 152 or decrease the bias force applied to the first roller 148 and/or second rollers by the biasing member 154.

According to an aspect, a crop conditioning system for an agricultural vehicle is provided. The crop conditioning system may comprise a crop conditioning arrangement comprising a frame, a first roller rotatably mounted to the frame, and a second roller movably and rotatably mounted to the frame above the first roller. A space between the first roller and second roller may define a gap for receiving crop material. The crop conditioning arrangement may include a biasing member operatively coupled to the second roller to generate a bias force biasing the second roller toward the first roller while crop material moves between the first roller and the second roller. A first sensor may be operatively coupled to the second roller and configured to detect the gap. The crop conditioning system may further include a controller that receives input data from the first sensor and outputs control signals to control the crop conditioning arrangement. The controller may include at least one processor and a memory that stores instructions. When the instructions are executed by the at least one processor, the instructions may configure the at least one processor to determine a status of the crop conditioning arrangement based on the input data, the status being indicative of at least one of a level of crop conditioning by the crop conditioning arrangement or an operating status of the conditioning arrangement. The instructions may further configure the processor to generate adjustment data indicative of an adjustment to the second roller of the crop conditioning arrangement in response to the status of the crop conditioning arrangement.

In an example, the status of the crop conditioning arrangement indicates at least one of under-conditioning of a crop, over-conditioning of the crop, optimal conditioning of the crop, gap too big, or gap too small.

In another example, the controller transmits controls signals including the adjustment data to a user interface in an agricultural vehicle and an operator of the agricultural vehicle adjusts the gap according to the adjustment data manually.

In another example, the crop condition system further comprises an actuator operatively coupled to the second roller and the controller is configured to command the actuator to move the second roller to increase or decrease the gap.

In another example, the controller transmits controls signals including the adjustment data to a user interface in an agricultural vehicle and commands the actuator to increase or decrease the gap according to the adjustment data and an operator's instructions entered on the user interface.

In another example, the controller transmits controls signals including the adjustment data to the actuator and commands the actuator to automatically increase or decrease the gap according to the adjustment data.

In another example, the crop condition system further comprises a second sensor operatively coupled to the biasing member configured to detect the bias force.

In another example, the controller further receives input data from the second sensor to determine the status of the crop conditioning arrangement.

In another example, the crop condition system further comprises an actuator operatively coupled to the biasing member, and the controller is configured to command the actuator to adjust the biasing member to increase or decrease the bias force.

In another example, the biasing member is one of a spring, hydraulic cylinder, or gas cylinder.

In another example, the actuator is one of an electric actuator, a gas cylinder, or a hydraulic cylinder.

In another example, the first sensor is a load cell or a strain gauge.

According to another example, a crop conditioning system for an agricultural vehicle is provided. The crop conditioning system may comprise a crop conditioning arrangement comprising a frame, a first roller rotatably mounted to the frame, and a second roller movably and rotatably mounted to the frame above the first roller. A space between the first roller and second roller may define a gap for receiving crop material. The crop conditioning arrangement may include a biasing member operatively coupled to the second roller to generate a bias force biasing the second roller toward the first roller while crop material moves between the first roller and the second roller. A first sensor may be operatively coupled to the first roller and the second roller and configured to detect the bias force. The crop conditioning system may further include a controller that receives input data from the first sensor and outputs control signals to control the crop conditioning arrangement. The controller may include at least one processor and a memory that stores instructions. When the instructions are executed by the at least one processor, the instructions may configure the at least one processor to determine a status of the crop conditioning arrangement based on the input data, the status being indicative of at least one of a level of crop conditioning by the crop conditioning arrangement or an operating status of the conditioning arrangement. The instructions may further configure the processor to generate adjustment data indicative of an adjustment to the biasing member of the crop conditioning arrangement in response to the status of the crop conditioning arrangement.

In another example, the controller transmits controls signals including the adjustment data to a user interface in an agricultural vehicle and an operator of the agricultural vehicle adjusts the bias force according to the adjustment data manually.

In another example, the crop condition system further comprises an actuator operatively coupled to the biasing member and the controller is configured to command the actuator to increase or decrease the biasing force.

In another example, the controller transmits controls signals including the adjustment data to a user interface in an agricultural vehicle and commands the actuator to increase or decrease the bias force according to the adjustment data and an operator's instructions entered on the user interface.

In another example, the controller transmits controls signals including the adjustment data to the actuator and commands the actuator to automatically increase or decrease the bias force according to the adjustment data.

In another example, the crop condition system further comprises a second sensor operatively coupled to the first roller and the second roller and configured to detect the gap.

In another example, the controller further receives input data from the second sensor to determine the status of the crop conditioning arrangement.

According to yet another example, a crop conditioning system for an agricultural vehicle is provided. The crop conditioning system may comprise a crop conditioning arrangement comprising a frame, a first roller rotatably mounted to the frame, and a second roller movably and rotatably mounted to the frame above the first roller. A space between the first roller and second roller may define a gap for receiving crop material. The crop conditioning arrangement may include a biasing member operatively coupled to the second roller to generate a bias force biasing the second roller toward the first roller while crop material moves between the first roller and the second roller. A first sensor may be operatively coupled to the second roller and configured to detect the gap, and a second sensor may be operatively coupled to the biasing member and configured to detect the bias force. An actuator may be operatively coupled to the second roller. The crop conditioning system may further include a controller that receives input data from the first sensor and second sensor and outputs control signals to control the crop conditioning arrangement. The controller may include at least one processor and a memory that stores instructions. When the instructions are executed by the at least one processor, the instructions may configure the at least one processor to determine a status of the crop conditioning arrangement based on the input data, the status being indicative of at least one of a level of crop conditioning by the crop conditioning arrangement or an operating status of the conditioning arrangement. The instructions may further configure the processor to generate adjustment data indicative of an adjustment to the second roller of the crop conditioning arrangement in response to the status of the crop conditioning arrangement. The instructions may further configure the processor to command the actuator to move the second roller to increase or decrease the gap according to the adjustment data.

While various spatial and directional terms, including but not limited to top, bottom, lower, mid, lateral, horizontal, vertical, front and the like are used to describe the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. Of course, those skilled in the art will recognize many modifications may be made to this configuration without departing from the scope or spirit of the claimed subject matter.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Various operations of implementations are provided herein. In one implementation, one or more of the operations described may constitute computer readable instructions stored on one or more computer readable media, which if executed by a computing device, will cause the computing device to perform the operations described. The order in which some or all of the operations are described should not be construed as to imply that these operations are necessarily order dependent. Alternative ordering will be appreciated by one skilled in the art having the benefit of this description. Further, it will be understood that not all operations are necessarily present in each implementation provided herein.

Any range or value given herein can be extended or altered without losing the effect sought, as will be apparent to the skilled person.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure.

As used in this application, the terms "component," "module," "system," "interface," and the like are generally intended to refer to a computer-related entity, either hardware, a combination of hardware and software, software, or software in execution. For example, a component may be, but is not limited to being, a process running on a processor, a processor, an object, an executable, a thread of execution, a program and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus or article of manufacture using standard programming and/or engineering techniques to produce software, firmware, hardware or any combination thereof to control a computer to implement the disclosed subject matter. The term "article of manufacture" as used herein is intended to encompass a computer program accessible from any computer-readable device, carrier or media. Of course, those skilled in the art will recognize many modifications may be made to this configuration without departing from the scope or spirit of the claimed subject matter.

In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this implementation. It is intended to include all such modifications and alterations in so far as they come within the scope of the appended claims or the equivalents thereof.

## Claims

1. A crop conditioning system for an agricultural vehicle, comprising:
a crop conditioning arrangement comprising:
a frame,
a first roller rotatably mounted to the frame,
a second roller movably and rotatably mounted to the frame above the first roller, wherein a space between the first roller and second roller defines a gap for receiving crop material,
a biasing member operatively coupled to the second roller to generate a bias force biasing the second roller toward the first roller while crop material moves between the first roller and the second roller, and
a first sensor operatively coupled to the second roller and configured to detect the gap,
a controller that receives input data from the first sensor and outputs control signals to control the crop conditioning arrangement, wherein the controller includes:
at least one processor; and
a memory that stores instructions that, when executed by the at least one processor, configure the at least one processor to:
determine a status of the crop conditioning arrangement based on the input data, the status being indicative of at least one of a level of crop conditioning by the crop conditioning arrangement or an operating status of the conditioning arrangement; and
generate adjustment data indicative of an adjustment to the second roller of the crop conditioning arrangement in response to the status of the crop conditioning arrangement.

2. The crop conditioning system of claim 1, wherein the status of the crop conditioning arrangement indicates at least one of under-conditioning of a crop, over-conditioning of the crop, optimal conditioning of the crop, gap too big, or gap too small.

3. The crop conditioning system of claim 1 or 2, wherein the controller transmits controls signals including the adjustment data to a user interface in an agricultural vehicle and an operator of the agricultural vehicle manually adjusts the gap according to the adjustment data.

4. The crop conditioning system according to at least one of the claims 1 to 3, further comprising a first actuator operatively coupled to the second roller and the controller is configured to command the first actuator to move the second roller to increase or decrease the gap.

5. The crop conditioning system according to at least one of the claims 1 to 4, wherein the controller transmits controls signals including the adjustment data to a user interface in an agricultural vehicle and commands the first actuator to increase or decrease the gap according to the adjustment data and an operator's instructions entered on the user interface.

6. The crop conditioning system according to at least one of the claims 1 to 5, wherein the controller transmits controls signals including the adjustment data to the first actuator and commands the first actuator to automatically increase or decrease the gap according to the adjustment data.

7. The crop conditioning system according to at least one of the claims 1 to 6, further comprising a second sensor operatively coupled to the biasing member configured to detect the bias force.

8. The crop conditioning system according to at least one of the claims 1 to 7, wherein the controller further receives input data from the second sensor to determine the status of the crop conditioning arrangement.

9. The crop conditioning system according to at least one of the claims 1 to 8, wherein the controller transmits controls signals including the adjustment data to a user interface in an agricultural vehicle and an operator of the agricultural vehicle manually adjusts the bias force according to the adjustment data.

10. The crop conditioning system according to at least one of the claims 1 to 9, further comprising a second actuator operatively coupled to the biasing member and the controller is configured to command the second actuator to adjust the biasing member to increase or decrease the bias force.

11. The crop conditioning system according to at least one of the claims 1 to 10, wherein the controller transmits controls signals including the adjustment data to a user interface in an agricultural vehicle and commands the second actuator to increase or decrease the bias force according to the adjustment data and an operator's instructions entered on the user interface.

12. The crop conditioning system according to at least one of the claims 1 to 11, wherein the controller transmits controls signals including the adjustment data to the second actuator and commands the second actuator to automatically increase or decrease the bias force according to the adjustment data.

13. The crop conditioning system according to at least one of the claims 1 to 12, wherein the biasing member is one of a spring, hydraulic cylinder, or gas cylinder.

14. The crop conditioning system according to at least one of the claims 1 to 13, wherein the first actuator and/or second actuator is one of an electric actuator, a gas cylinder, or a hydraulic cylinder.

15. The crop conditioning system of claims according to at least one of the claims 1 to 14, wherein the first sensor and/or second sensor is a load cell or a strain gauge.
